# FASCICULE DE BREVET EUROPEEN

(11) **EP 3 554 888 B1**
(45) Date de publication et mention de la délivrance du brevet: **07.09.2022**
(21) Numéro de dépôt: 17821574.5
(22) Date de dépôt: 18.12.2017
(51) Int. Cl.: B60L 53/63, H02J 3/28

(54) **DISPOSITIF DE RECHARGE AMÉLIORÉ, NOTAMMENT POUR VÉHICULE ÉLECTRIQUE**
VERBESSERTE LADEVORRICHTUNG, INSBESONDERE FÜR EIN ELEKTROFAHRZEUG
IMPROVED CHARGING DEVICE, IN PARTICULAR FOR AN ELECTRIC VEHICLE

(30) Priorité: 19.12.2016 FR 1662747
(43) Date de publication de la demande: 23.10.2019
(73) Titulaire: Electricité de France, 75008 Paris (FR)
(72) Inventeur: BEAUDE, Olivier, 75003 Paris (FR); KADDOUR, Bayram, 91300 Massy (FR); AUGUSTIN, Bertrand, 78000 Versailles (FR); PENNEC, Julien, 91300 Massy (FR)
(74) Mandataire: Plasseraud IP
(86) Numéro de dépôt international: PCT/EP2017/083375
(87) Numéro de publication internationale: WO 2018/114842

(56) Documents cités:
- FR-A1- 2 998 530
- US-A1- 2011 043 165
- US-A1- 2012 095 612
- US-A1- 2014 200 724

## Description

Le domaine de l'invention se rapporte aux dispositifs de recharge, notamment pour véhicule électrique. Avec l'accroissement du parc de véhicules électriques, les dispositifs configurés pour assurer la recharge de ces véhicules sont eux-mêmes destinés à augmenter substantiellement en nombre. Or, l'emploi de ces dispositifs de recharge peut être très impactant pour le réseau électrique auquel ils sont raccordés, et notamment pour la portion basse-tension de ce réseau, via laquelle les consommateurs sont raccordés au réseau de transport d'énergie électrique.

Par exemple, les documents FR 2 998 530 A1, US 2014/200724 A1 et US 2012/095612 A1 divulguent des dispositifs de recharge.

Typiquement, certains dispositifs de recharge, notamment ceux ayant vocation à être installés en zone résidentielle, sont raccordés à un point de livraison d'électricité auquel sont raccordés d'autres équipements électriques, et qui soutirent également à ce point de livraison.

Ceci impose aux dispositifs de recharge de fonctionner en considérant le soutirage des autres équipements.

Aussi, une approche classique pour la régulation de la puissance électrique délivrée par un dispositif de recharge pour la recharge d'un véhicule qui lui est raccordé est de déterminer celle-ci en fonction de la puissance soutirée par ces autres équipements, et de réguler cette puissance en temps réel en fonction des mesures de la puissance soutirée par ces autres équipements.

Or cette approche présente des inconvénients. En effet, elle est globalement rigide en ce qu'elle limite les phénomènes dont la régulation peut rendre compte. En outre, le suivi des données de soutirage des autres équipements et le traitement de ces données en temps réel pour la détermination de la puissance régulée fournie par le dispositif sont des tâches lourdes dans leur mise en œuvre, notamment en termes de puissance de calcul impliquée.

L'invention vise donc à améliorer la situation.

À cet effet, l'invention, telle que définie par les revendications indépendantes, concerne un dispositif de recharge, notamment de véhicule électrique, le dispositif de recharge étant adapté pour être raccordé en entrée à un point de livraison d'électricité adapté pour fournir une puissance électrique maximale, le dispositif de recharge étant adapté pour délivrer en sortie une puissance électrique régulée pour effectuer la recharge en énergie électrique d'un véhicule électrique, le dispositif de recharge comprenant :
- un module d'optimisation configuré pour construire un profil de recharge associé à une plage temporelle de recharge et représentatif d'une première puissance électrique de recharge adaptée pour être délivrée par le dispositif de recharge au cours de ladite plage temporelle de recharge pour la recharge du véhicule électrique, le profil de recharge étant construit au moins en fonction de prévisions de consommation électrique d'autres équipements raccordés audit point de livraison pour au moins une partie de ladite plage temporelle de recharge et de la puissance électrique maximale, et
- un module de régulation adapté pour réguler la puissance électrique délivrée en sortie, le module de régulation présentant :
   - un premier mode de fonctionnement dans lequel il est configuré pour réguler la puissance électrique délivrée en sortie pour faire correspondre ladite puissance électrique à la première puissance électrique de recharge pendant au moins une partie de la plage temporelle de recharge associée, et
   - un deuxième mode de fonctionnement dans lequel il est configuré pour réguler la puissance électrique délivrée en sortie pour la faire correspondre à une deuxième puissance électrique de recharge déterminée au moins en fonction de données de consommation électrique desdits autres équipements mesurée au cours de ladite plage temporelle et de la première puissance de recharge du profil de recharge,
le module de régulation étant adapté pour basculer entre le premier mode de fonctionnement et le deuxième mode de fonctionnement.

Selon un aspect de l'invention, le module de régulation est configuré pour basculer du premier mode de fonctionnement vers le deuxième mode de fonctionnement en réponse à la vérification d'au moins une première condition dont au moins une condition est associée à un ou plusieurs intervalles de temps de la plage temporelle de recharge et est définie en fonction des prévisions de consommation électrique des autres équipements pour le ou lesdits intervalles de temps et de données de consommation électrique desdits autres équipements mesurée pendant la plage temporelle de recharge.

Selon un aspect de l'invention, l'au moins une condition est configurée pour être détectée comme vérifiée en réponse au fait qu'une grandeur représentative de l'écart entre d'une part la prévision de consommation électrique des autres équipements et d'autre part la consommation desdits autres équipements telle que mesurée aux instants correspondants ou bien une prévision de consommation desdits autres équipements déterminées pour les instants correspondants à partir desdites données de consommation électriques mesurée pendant la plage temporelle de recharge est supérieure à une valeur seuil pendant le ou les intervalles associés.

Selon un aspect de l'invention, au moins une première condition est définie en fonction de la comparaison entre la puissance électrique maximale du point de livraison et d'une grandeur représentative d'une puissance électrique totale à fournir par ledit point de livraison pour le dispositif de recharge et lesdits autres équipements au cours de ladite plage temporelle de recharge, la grandeur représentative d'une puissance électrique totale à fournir par le point de livraison pour le dispositif de recharge et lesdits autres équipements étant construite pour correspondre à une puissance électrique totale telle qu'estimée pour au moins un intervalle de temps futur de la plage temporelle de recharge.

Selon un aspect de l'invention, la première condition définie en fonction de la comparaison entre la puissance électrique maximale du point de livraison et de ladite grandeur est construite pour être vérifiée si la valeur de ladite grandeur dépasse la puissance maximale pour un nombre prédéterminé d'intervalles de temps futurs de la plage temporelle, ledit nombre prédéterminé étant fonction d'une amplitude du dépassement de la puissance maximale par ladite grandeur.

Selon un aspect de l'invention, le module d'optimisation est adapté pour mettre à jour le profil de recharge pour au moins une portion restante de ladite plage temporelle de recharge en fonction au moins de prévisions de consommation électrique des autres équipements raccordés audit point de livraison pour au moins une partie de ladite portion restante de la plage temporelle de recharge déterminées au moins à partir de données de consommation électrique desdits autres équipements mesurée au cours de la plage temporelle de recharge.

Selon un aspect de l'invention, le module d'optimisation est adapté pour la mise à jour du profil de recharge en réponse à la vérification d'une condition prédéterminée définie en fonction d'un écart entre l'énergie électrique correspondant à la puissance électrique régulée effectivement fournie au véhicule électrique pendant la plage temporelle de recharge jusqu'à un instant donné, et l'énergie électrique correspondant à la première puissance électrique définie par le profil de recharge jusqu'à l'instant donné de la plage de recharge.

Selon un aspect de l'invention, le module de régulation est configuré pour basculer du deuxième mode de fonctionnement vers le premier mode de fonctionnement pour la mise en œuvre du profil de recharge en réponse à la vérification d'au moins une deuxième condition dont au moins une condition est associée à un ou plusieurs intervalles de temps de la plage temporelle de recharge et est définie en fonction des prévisions de consommation électrique des autres équipements pour le ou lesdits intervalles de temps et de données de consommation électrique desdits autres équipements mesurée pendant la plage temporelle de recharge.

Selon un aspect de l'invention, l'au moins une condition de l'au moins une deuxième condition est configurée pour être détectée comme vérifiée en réponse au fait qu'une grandeur représentative de l'écart entre d'une part la prévision de consommation électrique des autres équipements et d'autre part la consommation desdits autres équipements telle que mesurée aux instants correspondants ou bien une prévision de consommation desdits autres équipements déterminées pour les instants correspondants à partir desdites données de consommation électriques mesurée pendant la plage temporelle de recharge est inférieure à une valeur seuil pendant le ou les intervalles associés.

Selon un aspect de l'invention, le profil de recharge est en outre construit en fonction d'au moins un élément parmi :
- un comportement en recharge d'un dispositif de stockage d'énergie électrique du véhicule électrique,
- un besoin en énergie électrique du dispositif de stockage d'énergie électrique du véhicule électrique pour la recharge dudit dispositif de stockage d'énergie électrique,
- un tarif de l'énergie électrique,
- un comportement électrotechnique d'un équipement de protection électrique du point de livraison.

Selon un aspect de l'invention, la deuxième puissance électrique est en outre définie en fonction d'au moins un élément parmi :
- un comportement électrotechnique d'un équipement de protection électrique au niveau du point de livraison,
- une contrainte de recharge du véhicule électrique représentative d'au moins une plage de valeurs de puissance électrique fournie en sortie qui est exclue ou d'un nombre maximal d'arrêts de la charge du véhicule électrique par le dispositif de recharge au cours de la plage temporelle de recharge.

Selon un aspect de l'invention, le profil de recharge est déterminé en tant que solution optimale d'un problème de minimisation de la valeur maximale de la puissance électrique soutirée au point de livraison par le dispositif de recharge et les autres équipements pour la plage temporelle de recharge, d'un coût total de l'énergie électrique à fournir par le point de livraison pour la plage temporelle de recharge et d'un instant de fin de recharge du véhicule électrique.

Selon un aspect de l'invention, le dispositif de recharge comprend en outre un module d'apprentissage configuré pour générer des données d'apprentissage à partir du fonctionnement du dispositif de recharge, au moins les prévisions de consommation électrique des autres équipements raccordés audit point de livraison pour au moins une partie de ladite plage temporelle de recharge étant construites en fonction desdits données d'apprentissage.

L'invention concerne en outre un procédé de recharge de véhicule électrique au moyen d'un dispositif de recharge raccordé en entrée à un point de livraison d'électricité adapté pour fournir au dispositif de recharge une puissance électrique maximale et pour délivrer en sortie une puissance électrique régulée pour effectuer la recharge en énergie électrique d'un véhicule électrique, le procédé comprenant :
- construire un profil de recharge associé à une plage temporelle de recharge et représentatif d'une première puissance électrique de recharge adaptée pour être délivrée en sortie au cours de ladite plage temporelle de recharge pour la recharge du véhicule électrique, le profil de recharge étant construit au moins en fonction de prévisions de consommation électrique d'autres équipements raccordés audit point de livraison pour au moins une partie de ladite plage temporelle de recharge et de la puissance électrique maximale, et
- mettre en œuvre un premier mode de fonctionnement du dispositif de recharge dans lequel le dispositif de recharge fournit en sortie une puissance électrique régulée pour correspondre à la première puissance électrique de recharge pendant au moins une partie de la plage temporelle de recharge associée.
- basculer du premier mode de fonctionnement vers un deuxième mode de fonctionnement dans lequel le dispositif de recharge délivrant en sortie une puissance électrique régulée pour correspondre à une deuxième puissance électrique de recharge déterminée au moins en fonction de données de consommation électrique desdits autres équipements mesurée au cours de ladite plage temporelle et de la première puissance de recharge du profil de recharge.

L'invention concerne en outre un programme informatique comprenant des instructions pour la mise en œuvre du procédé tel que défini ci-dessus lorsqu'exécutées par un processeur.

L'invention sera mieux comprise à la lecture de la description détaillée qui va suivre, donnée uniquement à titre d'exemple et faite en référence aux Figures annexées, sur lesquelles :
- La Figure 1 est une illustration schématique d'un système comprenant un dispositif de recharge selon l'invention ;
- Les Figures 2A et 2B est une illustration schématique de grandeurs considérées au cours d'une plage temporelle de recharge ;
- la Figure 3 est un diagramme-bloc d'un procédé de recharge selon l'invention.

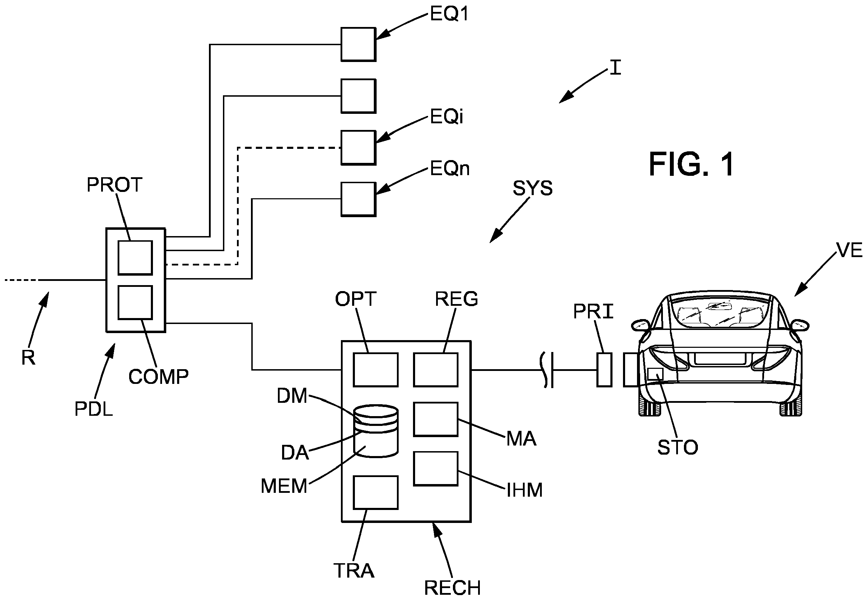

La Figure 1 illustre un système SYS au sens de l'invention.

Le système SYS est prévu pour la recharge en énergie électrique d'un véhicule électrique VE, assurant au moins sa propulsion en tout ou partie à partir d'énergie électrique.

Le système SYS comprend un point de livraison PDL, au moins un équipement EQi raccordé au point de livraison PDL, ainsi qu'un dispositif de recharge RECH selon l'invention, ci-après dispositif RECH.

Les équipements EQi et le dispositif de recharge RECH font partie d'une installation I. Cette installation correspond par exemple à un lieu de résidence. Par exemple, les équipements EQi sont au moins en partie installés à l'intérieur d'une habitation. Le dispositif de recharge est par exemple agencé à l'extérieur.

Alternativement, cette installation est un lieu tertiaire tel qu'un lieu de commerce ou encore une entreprise. L'installation comprend par exemple un parking aux abords duquel ou au niveau duquel le dispositif de recharge est agencé.

De façon générale, l'invention trouve son application quelle que soit l'installation I.

Préférentiellement, les équipements EQi et le dispositif de recharge constituent l'ensemble des éléments susceptibles de soutirer de l'énergie électrique au point de livraison. Autrement dit, seuls les équipements EQi et le dispositif de recharge RECH sont adaptés pour soutirer de l'énergie électrique au point de livraison PDL.

Le système SYS, et plus spécifiquement le point de livraison PDL, est raccordé à un réseau R d'alimentation en énergie électrique pour son approvisionnement en énergie électrique. Ce réseau R est lui-même raccordé à une ou plusieurs installations de production d'électricité, qui transite via le réseau R jusqu'au point de livraison PDL.

Dans le contexte de l'invention, le dispositif RECH est destiné à être raccordé au véhicule VE pour la recharge de celui-ci en énergie électrique.

À cet effet, le véhicule VE comprend un dispositif de stockage STO pour le stockage d'énergie électrique et la restitution de celle-ci au moins à un bloc de propulsion du véhicule VE assurant la propulsion du véhicule au moins à partir d'énergie électrique.

Le point de livraison PDL est prévu pour l'approvisionnement en énergie électrique des équipements EQi et du dispositif RECH.

En pratique, le point de livraison PDL correspond au nœud entre le réseau R et l'installation I à laquelle les équipements EQi et le dispositif RECH appartiennent. Il comprend par exemple un ou plusieurs équipements électriques configurés pour opérer ce raccord.

Par exemple, le point de livraison PDL comprend un dispositif de comptage COMP pour le décompte de l'énergie/puissance électrique soutirée au point de livraison par les équipements EQi et le dispositif RECH.

Le dispositif de comptage COMP est configuré pour décompter au moins la puissance électrique et l'énergie électrique soutirées par ces éléments au cours du temps.

Avantageusement, il est adapté pour catégoriser l'énergie électrique soutirée en usages et mesurer la consommation pour chacun de ces usages. Ces usages correspondent chacun à un type d'activités parmi un ensemble prédéterminé.

Par exemple, pour une installation I de type résidentielle, ces usages comprennent le chauffage de l'installation I, la réfrigération de l'installation I, la production d'eau chaude sanitaire, l'éclairage de l'installation I, un usage cuisson, correspondant à l'emploi d'énergie électrique pour cuire, un usage lavage correspondant à l'emploi d'énergie électrique pour laver, un usage dit produits bruns, correspondant à un emploi d'énergie électrique pour le fonctionnement d'appareils électroménagers tels que des téléviseurs, etc.

On remarque que cette catégorisation en usages est optionnelle.

En outre, le dispositif de comptage est configuré pour communiquer avec le dispositif de recharge, en particulier pour la fourniture des données représentatives de la consommation, par exemple de la puissance, des équipements EQi et collectées par lui au cours du temps. On remarque que les données communiquées à un instant donné sont relatives à un instant précédant immédiatement cet instant, ou/et relatives à des instants plus éloignés.

Il comprend avantageusement en outre un dispositif de protection PROT configuré pour protéger l'installation électrique définie par les équipements et le dispositif RECH et les éléments les raccordant au point de livraison. Ce dispositif de protection PROT comprend avantageusement un organe de coupure. On remarque que cet organe de coupure peut être matériel, et comprend par exemple un disjoncteur, et/ou logiciel.

Dans certaines réalisations, le dispositif de protection PROT peut faire partie intégrante du dispositif de comptage COMP, au moins en partie.

Dans le contexte de l'invention, le point de livraison PDL est configuré pour délivrer une puissance électrique maximale, notée Pmax. Cette puissance maximale est par exemple déterminée en fonction de l'abonnement de soutirage souscrit auprès d'un fournisseur pour le point de livraison. Cette puissance Pmax est par exemple inférieure ou égale à 36 kVA.

Les équipements EQi sont configurés pour fonctionner au moins en partie à partir d'énergie électrique.

Ces équipements EQi correspondent par exemple à des équipements classiques équipant un lieu de résidence, tels que des radiateurs, des luminaires, des appareils électroménagers, un four, des plaques de cuisson, un chauffe-eau, etc. Un autre type d'équipements envisagé est relatif aux serveurs, par exemple des serveurs de données.

Comme indiqué précédemment, ces équipements sont tous raccordés au point de livraison.

Le dispositif de recharge RECH selon l'invention est spécifiquement prévu pour assurer la recharge du véhicule électrique VE en énergie électrique à partir de l'énergie électrique qu'il soutire au point de livraison.

En outre, il est configuré pour communiquer avec le point de livraison, notamment le dispositif de comptage, et pour communiquer avec le véhicule électrique. Ces communications sont par exemple mises en œuvre par tout moyen connu, tel qu'Internet, ZigBee, WiFi, un moyen filaire, tel que par exemple un moyen reposant par exemple sur une technologie par courant porteur en ligne (CPL).

Le dispositif RECH comprend une prise PRI, une mémoire MEM et un module de traitement TRA. En outre, il comprend un module d'optimisation OPT, un module de régulation REG et un module d'apprentissage MA. Avantageusement, il comprend en outre une interface homme-machine, ci-après interface IHM.

La prise PRI est destinée à être branchée au véhicule électrique VE pour raccorder électriquement celui-ci au dispositif de recharge pour la recharge du véhicule électrique. A cet effet, le véhicule comprend lui-même une prise de forme complémentaire destinée à coopérer avec la prise PRI.

La prise PRI est par exemple de facture connue. Elle se présente par exemple sous la forme d'une prise femelle, la prise portée par le véhicule étant de type mâle.

La mémoire MEM comprend des programmes dont l'exécution par le module de traitement TRA permet le fonctionnement du dispositif de recharge.

Avantageusement, elle comprend en outre des données d'apprentissage DA décrites ci-après.

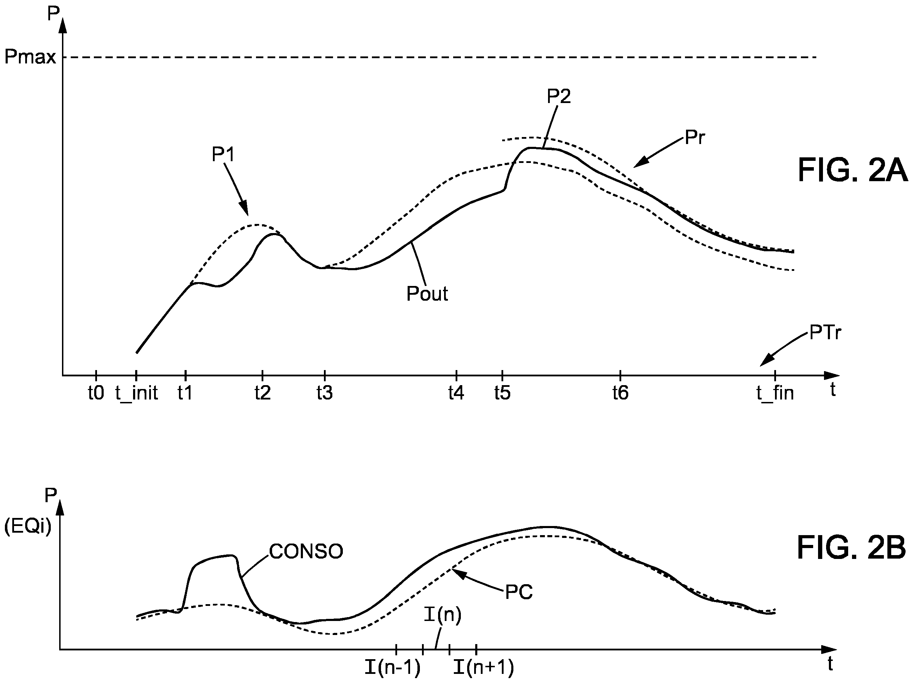

En outre, elle comprend avantageusement des données de mesure DM. Ces données de mesure sont représentatives de mesures, notamment de puissance électrique, soutirée par les équipements EQi au cours du temps. Au cours de la plage temporelle PTr, ces données définissent notamment une courbe de puissance CONSO (Figure 2B) représentative de la puissance électrique soutirée par les équipements EQi au point de livraison en fonction du temps.

Ces données sont construites à partir des données de consommation générées par le dispositif de comptage et envoyées au dispositif RECH, par exemple à fréquence régulière. Ces données incluent par exemple la courbe de charge du point de livraison n'incluant pas la consommation induite par la recharge du véhicule électrique.

On remarque que la mémoire MEM peut correspondre à une pluralité de mémoires de stockage distinctes, telles que par exemple une ou plusieurs mémoires volatiles et/ou une ou plusieurs mémoires non volatiles. Les différentes données sont par exemple distribuées entre ces mémoires distinctes.

Le module de traitement TRA est configuré pour le pilotage des différents éléments du dispositif de recharge RECH pour leur bon fonctionnement.

Le module de traitement TRA comprend par exemple un ou plusieurs processeurs.

Dans l'exemple de la Figure 1, le module d'optimisation OPT, le module de régulation REG et le module d'apprentissage MA ont été représentés comme des modules dédiés. En pratique, ils peuvent prendre une forme quelconque. En particulier, ils peuvent être logiciels, matériels ou comprendre une composante logicielle et une composante matérielle.

Par exemple, le module d'optimisation OPT comprend une composante logicielle stockée dans la mémoire et dont l'exécution par le module de traitement se traduit par la mise en œuvre des fonctionnalités décrites ci-après.

Il en va de même des modules de régulation et d'apprentissage. Concernant le module de régulation, celui-ci comprend avantageusement un dispositif matériel de régulation, comprenant par exemple un ou plusieurs convertisseurs configurés pour délivrer en sortie une puissance électrique régulée.

En référence aux Figures 1 et 2, le module d'optimisation OPT est configuré pour construire un profil de recharge Pr associé à une plage temporelle de recharge PTr. Le profil de recharge Pr est représentatif d'une première puissance électrique de recharge P1, ou première puissance P1, adaptée pour être délivrée en sortie du dispositif RECH au véhicule VE au cours de la plage PTr pour sa recharge. Autrement dit, à un instant donné, le profil de recharge est défini par la puissance P1 à cet instant, cette puissance P1 variant *a priori* au cours du temps.

Le profil de recharge Pr définit cette puissance pour au moins une partie de la plage de recharge. Avantageusement, il définit cette puissance P1 pour chaque instant de la plage PTr.

La plage PTr correspond à la plage temporelle au cours de laquelle le véhicule électrique est rechargé. Cette plage débute à un instant t_init et finit à un instant t_fin.

L'instant t_init est par exemple défini en fonction de l'instant du branchement du véhicule VE au dispositif de recharge. Par exemple, il correspond à cet instant.

Avantageusement, il lui est postérieur. Plus spécifiquement, il correspond avantageusement à l'instant où le dispositif de recharge commence à envoyer de l'énergie électrique au véhicule pour sa recharge. L'intervalle de temps entre le branchement du véhicule et cet instant est par exemple employé pour la mise en œuvre d'une étape initiale de préparation du dispositif de recharge décrite ci-après et au cours de laquelle le profil de recharge Pr est construit. On remarque que cette préparation peut également être mise en œuvre, ou du moins débuter, avec l'instant du branchement du véhicule, par exemple lorsque le véhicule est prévu pour fournir des informations relatives à ses besoins en énergie électrique à distance au dispositif de recharge.

L'instant t_fin correspond à l'instant auquel la recharge du véhicule VE est considérée comme achevée. En pratique, à partir de cet instant, aucune énergie électrique n'est plus alors fournie au véhicule pour sa recharge jusqu'à ce que celui-ci soit débranché de la prise PRI.

L'instant t_fin est par exemple connu préalablement à l'instant t_init. Dans ce cas, l'instant t_fin est par exemple prédéterminé en fonction d'une information reçue par le dispositif de recharge RECH. Cette information est par exemple issue du véhicule VE lui-même, ou bien est saisie par un utilisateur, par exemple via l'interface IHM.

Alternativement, cet instant est déterminé, par exemple par le module d'optimisation OPT. En effet, cet instant est par exemple un élément du résultat du processus de construction du profil de recharge.

La plage de recharge PTr est par exemple subdivisée en intervalles consécutifs pris en compte dans le cadre du fonctionnement du dispositif de recharge RECH (intervalles notés I(n-1), I(n), I(n+1) en Figure 2B). Ces intervalles sont par exemple réguliers (c'est-à-dire ayant tous une même durée), leur durée étant par exemple de l'ordre de la seconde.

Alternativement, ces intervalles ne sont pas tous de même durée. Par exemple, dans un premier mode de fonctionnement du dispositif, ils présentent une durée régulière, par exemple d'un ordre de grandeur de l'ordre de la minute. Dans un deuxième mode, ils sont par exemple également réguliers, avec une durée par exemple de l'ordre de la seconde. Ces modes de fonctionnement sont décrits ci-après.

Le profil de recharge Pr est construit au moins en fonction de prévisions de consommation électrique PC des équipements EQi qui sont adaptés pour soutirer de l'électricité au point de livraison PDL. Ces prévisions couvrent au moins une partie de la plage PTr, et avantageusement toute la plage PTr.

Par exemple, les prévisions prises en compte couvrent la même portion de la plage de recharge que celle pour laquelle le profil de recharge Pr définit la puissance P1, la valeur de la puissance P1 à un instant donné étant déterminée au moins en fonction de la prévision de consommation des équipements EQi pour cet instant.

Les prévisions de consommation sont établies préalablement au début de la plage de recharge PTr.

Ces prévisions correspondent avantageusement à la consommation prévisionnelle cumulée sur les différents équipements EQi, et définissent ainsi le comportement attendu des seuls éléments susceptibles de prélever de l'énergie électrique au point de livraison en dehors du dispositif RECH lors de la recharge du véhicule électrique VE.

Par exemple, ces prévisions se présentent sous la forme d'une puissance électrique variable en fonction du temps.

Ces prévisions sont par exemple déterminées de manière connue, par exemple à partir d'un modèle GAM, qui est l'acronyme anglophone de « Generalized Additive Model », qui peut être traduit par « modèle additif généralisé ».

Par exemple, elles sont établies à partir des données de mesure DM, qui définissent un historique de consommation des équipements EQi. Avantageusement, elles sont plus spécifiquement établies à partir de données de mesure correspondant à des tranches horaires couvrant celles de la plage temporelle de recharge PTr. Ces prévisions sont par exemple établies à partir de prévisions pour chaque usage associé au point de livraison PDL. Ces prévisions par usage sont par exemple elles-mêmes déterminées à partir des données de mesure DM, qui peuvent représenter la consommation des différents usages des équipements EQi au cours du temps.

Avantageusement, les prévisions faites à un instant donné sont déterminées au moins en fonction des données de mesure DM de la consommation des équipements EQi portant sur un laps de temps précédant immédiatement cet instant. Autrement dit, les données de consommation les plus récentes sont prises en compte pour la construction des prévisions.

Le profil de recharge Pr est également déterminé en fonction de la puissance maximale Pmax que le point de livraison peut délivrer.

Avantageusement, c'est-à-dire optionnellement mais de manière avantageuse, le profil de recharge Pr est en outre déterminé en fonction d'au moins un élément parmi :
- un comportement en recharge du dispositif de stockage STO du véhicule électrique,
- le besoin en énergie électrique du dispositif de stockage STO du véhicule électrique pour la recharge de celui-ci,
- un tarif de l'énergie électrique fournie par le point de livraison PDL pour la recharge du véhicule,
- le comportement électrotechnique du dispositif de PROT du point de livraison PDL,
- une capacité de puissance du dispositif de recharge RECH, c'est-à-dire une puissance maximale que le dispositif de recharge RECH est lui-même dimensionné pour délivrer.

Le comportement en recharge du dispositif STO est représentatif du fonctionnement en charge du dispositif de stockage. Ce comportement inclut par exemple des considérations relatives à une ou plusieurs contraintes concernant la puissance électrique reçue, telle que sa valeur relativement à une borne inférieure à dépasser et/ou une borne supérieure à ne pas dépasser, ou bien à des variations de puissance au cours du temps à ne pas dépasser. Ce comportement peut alternativement ou parallèlement inclure une considération relative au nombre d'interruptions de charge observées pendant la période PTr, qui est par exemple à maintenir inférieur à une valeur prédéterminée.

En pratique, ce comportement en recharge du dispositif STO est représentatif de caractéristiques de la recharge du dispositif de stockage STO qu'il est préférable d'observer pour ne pas endommager celui-ci.

Le besoin en énergie du dispositif de stockage STO correspond à un état de charge du dispositif de stockage prescrit pour le besoin en mobilité du véhicule. Ce besoin est par exemple fonction de la quantité d'énergie électrique stockée dans le dispositif STO lors de son branchement au dispositif RECH, ainsi que d'une quantité d'énergie électrique souhaitée en fin de charge. On remarque que l'état de charge final ne correspond pas nécessairement à une recharge complète du dispositif de stockage STO.

Cette quantité d'énergie électrique souhaitée en fin de charge est par exemple fournie au dispositif RECH, par exemple par l'utilisateur via l'interface IHM ou le véhicule VE. Alternativement, elle est estimée, par exemple par le module d'optimisation ou par un autre équipement quelconque du dispositif de recharge RECH, tel qu'un module dédié. Cette estimation est par exemple construite à partir de données d'utilisation du véhicule. Ces données d'utilisation sont par exemple fournies par le véhicule au dispositif RECH, qui les stocke dans la mémoire MEM. Par exemple, ces données comprennent un historique de déplacements réalisés avec le véhicule. Cet historique comprend ou est par exemple déterminé à partir de données de positionnement GNSS (pour « Global Navigation Satellite System », qui signifie système de positionnement global par satellite) représentatives de positions que le véhicule a prises au cours du temps, et que le dispositif RECH obtient du véhicule VE.

En pratique, le besoin en énergie électrique du dispositif de recharge se présente par exemple sous la forme d'un état de charge à atteindre en fin de plage PTr.

Le tarif de l'énergie électrique est représentatif du coût de l'énergie électrique soutirée ou à soutirer au point de livraison pour la recharge du véhicule électrique. Autrement dit, il s'agit du prix de la recharge du véhicule en électricité que le dispositif RECH a vocation à réaliser. De manière connue, ce prix (i.e. le tarif) est déterminé à partir du coût unitaire associé à une unité de mesure d'électricité, typiquement un kilowattheure (kWh). Or, de manière connue, le coût de cette unité de mesure d'électricité, par exemple exprimé en euros par kilowattheure, peut différer d'une plage horaire à une autre.

Par exemple, ce tarif est déterminé à partir de données stockées dans la mémoire qui incluent des index tarifaires en fonction du temps adaptés pour être mis en correspondance avec une donnée de prix par exemple fournie par un équipement distant. On remarque que ces index tarifaires peuvent faire l'objet d'une mise à jour, par exemple déclenchée par un équipement extérieur, ou bien à fréquence régulière.

Le comportement électrotechnique du dispositif de protection PROT est représentatif du fonctionnement de celui-ci en fonction de la puissance soutirée au point de livraison PDL, et en particulier de conditions de basculement de celui-ci entre un état où il autorise le soutirage d'énergie électrique au point de livraison par le dispositif de recharge et les équipements EQi, et un état où il prévient ce soutirage, notamment afin de protéger l'installation I.

Par exemple, le dispositif de protection PROT peut être configuré pour autoriser le dépassement de la puissance maximale Pmax pendant un court laps de temps, mais bascule dans un état n'autorisant plus le soutirage au-delà de ce laps de temps. On remarque que le laps de temps en question est par exemple prédéterminé en fonction de l'amplitude du dépassement.

En pratique, ce comportement modélise la réaction du dispositif de protection aux événements intéressant la sécurité de la composante électrique de l'installation I.

Avantageusement, le module d'optimisation OPT est configuré pour déterminer le profil de recharge Pr en tant que solution optimale d'un problème d'optimisation à au moins un objectif et à au moins une contrainte.

On entend par « objectif » la quantité à minimiser dans le problème d'optimisation. On entend par « contrainte » une condition à vérifier par la solution du problème.

Par exemple, le ou les objectifs sont choisis parmi le coût (prix) associé à la recharge du véhicule électrique, la valeur maximale de la puissance électrique soutirée au point de livraison pendant la recharge du véhicule (c'est-à-dire la plus haute des valeurs prises par la puissance cumulée pour l'alimentation des équipements et la recharge du véhicule par le dispositif RECH lors de la période PTr), l'achèvement de la charge le plus tôt possible.

Avantageusement ces trois objectifs sont pris en compte, le profil de recharge étant alors construit comme solution optimale d'un problème de minimisation de la valeur maximale de la puissance électrique soutirée au point de livraison par le dispositif de recharge et les autres équipements pour la plage temporelle de recharge, d'un coût total de l'énergie électrique à fournir par le point de livraison pour la plage temporelle de recharge et l'instant de fin de charge.

De façon générale, la ou les contraintes sont avantageusement choisies parmi : la puissance maximale Pmax, dont le dépassement est à prévenir, le besoin en énergie électrique du véhicule, qui conditionne la quantité d'énergie totale fournie au véhicule pendant la plage PTr, et le comportement en recharge du dispositif de stockage STO, qui vise à prévenir une recharge du dispositif STO de nature à l'endommager.

On remarque que le dépassement de la puissance Pmax peut être autorisé dès lors que ce dépassement est opéré dans des conditions n'induisant pas un basculement du dispositif de protection PROT dans sa configuration n'autorisant pas le soutirage au point de livraison.

Le détail de la construction du profil de recharge Pr repose par exemple sur une approche multicritère.

Par exemple, au problème on associe une métrique définie à partir de plusieurs sous-métriques respectivement associées à l'un des objectifs. Chaque sous-métrique est pondérée par un facteur de forme choisie. La métrique est par exemple définie en tant que combinaison, par exemple linéaire, des différentes sous-métriques.

Chaque sous-métrique a par exemple une valeur correspondant à l'objectif associé, par exemple le tarif, l'instant de fin charge, la valeur de la puissance maximale atteinte au cours de la plage.

A partir des données du problème ainsi modélisé, on détermine le profil de recharge, par exemple par technique de résolution par programmation linéaire en nombres entiers (d'acronyme PLNE).

Alternativement, on peut employer une méthode dite hiérarchique (méthode parfois connue sous le nom de méthode epsilon contrainte), dans le cadre de laquelle on procède sur chaque sous-métrique de manière séquentielle.

On remarque que le profil de recharge Pr présente par exemple une configuration continue par morceaux. Par exemple, le profil définit pour chaque intervalle de temps considéré une unique valeur de la puissance P1 constante sur tout cet intervalle.

Avantageusement, le module d'optimisation OPT est adapté pour mettre à jour le profil de recharge Pr. Il est par exemple adapté pour ce faire au cours de la plage PTr, la mise à jour portant sur au moins une partie de la portion restante de la plage temporelle, et avantageusement toute cette portion restante.

Par exemple, pour ce faire, il est configuré pour mettre à jour les données utilisées pour la construction du profil de recharge initial, et pour déterminer le profil mis à jour à partir de ces données mises à jour.

Notamment, il est configuré pour mettre à jour les prévisions de consommation, par exemple à partir des données de mesure DM reçues depuis le début de la plage PTr. Avantageusement, quand le besoin en énergie électrique du véhicule est employé, il est configuré pour mettre à jour celui-ci, par exemple en tenant compte de la satisfaction partielle de ce besoin via l'énergie électrique déjà fournie au véhicule VE lors de la plage PTr.

Cette mise à jour est par exemple mise en œuvre sur commande, par exemple reçue du module de régulation.

Alternativement, le module d'optimisation OPT déclenche lui-même cette mise à jour. Avantageusement, cette mise à jour est mise en œuvre en réponse à la détection de la vérification d'une ou plusieurs conditions décrites ci-après.

Toujours en référence aux Figures 1 et 2, le module de régulation REG est configuré pour réguler la puissance électrique effectivement fournie par le dispositif RECH au véhicule VE pendant la période PTr. Cette puissance est notée Pout.

Cette puissance Pout est variable au cours du temps.

Le module de régulation REG comprend un premier mode de fonctionnement dans lequel il est configuré pour réguler la puissance Pout pour la faire correspondre à la puissance P1 du profil de recharge Pr.

Autrement dit, dans ce premier mode de fonctionnement, le module de régulation fournit une puissance électrique régulée adossée à la puissance P1 déterminée par le module d'optimisation, qui est alors la puissance prescrite pour la sortie du dispositif de recharge RECH.

En outre, le module de régulation REG comprend un deuxième mode de fonctionnement dans lequel il est configuré pour réguler la puissance Pout pour la faire correspondre à une deuxième puissance P2 prescrite.

Cette puissance P2 est déterminée en fonction de la puissance électrique maximale Pmax. En outre, elle est déterminée en fonction des données de mesure DM fournies par le dispositif de comptage COMP au dispositif RECH concernant la puissance électrique soutirée par les équipements EQi, et plus spécifiquement à partir des données définissant la courbe de puissance CONSO soutirée par les équipements EQi.

Avantageusement, ces données sont traitées par le module de régulation REG pour constituer une prévision à court terme de la puissance que les équipements EQi sont destinés à soutirer au point de livraison PDL. Par exemple, par « à court terme » on entend que cette prévision porte sur la consommation prévue pour tout ou partie de l'ensemble des intervalles futurs situés à moins d'un nombre prédéterminé s d'intervalles de l'intervalle courant, par exemple de l'ordre de 10 intervalles. Cet horizon est par exemple de 10, 20 ou encore 30 intervalles. Autrement dit, cette prévision porte sur un ou plusieurs intervalles futurs distants de moins de s intervalles de l'intervalle courant. Les prévisions portent avantageusement sur un ensemble d'intervalles consécutifs, tel que par exemple les 5, 10 ou 15 intervalles suivant l'intervalle courant, ou bien suivant un intervalle lui-même futur appartenant à l'horizon considéré.

Le détail de la détermination de ces prévisions est par exemple connu.

La deuxième puissance P2 est en outre déterminée en fonction de la puissance P1, c'est-à-dire du profil de recharge déterminée par le module d'optimisation.

Avantageusement, la deuxième puissance P2 est en outre déterminée à partir d'au moins un élément parmi :
- le comportement électrotechnique du dispositif de protection PROT du point de livraison PDL,
- une contrainte de recharge du véhicule électrique représentative d'au moins une plage de valeurs de puissance électrique Pout qui est exclue,
- d'un nombre maximal d'arrêts de la charge du véhicule électrique par le dispositif de recharge RECH au cours de la plage temporelle de recharge, c'est-à-dire d'occurrences de situations dans lesquelles P2 est nulle.

Un élément pouvant également être pris en compte est la capacité de puissance du dispositif de recharge RECH, c'est-à-dire une puissance maximale que le dispositif de recharge RECH est lui-même dimensionné pour délivrer.

Comme précédemment, le comportement électrotechnique du dispositif PROT est représentatif de sa réponse à des événements survenant sur la composante électrique de l'installation et sur le point de livraison, notamment aux dépassements de la puissance Pmax par la puissance totale soutirée au point de livraison PDL.

En pratique, ce comportement est pris en compte sous la forme d'un modèle, par exemple défini par une ou plusieurs règles. L'une de ces règles porte par exemple sur le fait que le dépassement de la puissance Pmax peut être opéré mais ne peut alors pas excéder une certaine valeur et ne doit pas rester vérifié sur une période d'une durée supérieure à une durée prédéterminée. Par exemple, ces règles se présentent sous la forme d'une ou plusieurs abaques.

Ainsi, par exemple, la puissance P2 est construite en fonction de cette ou ces règles, dont au moins une incorpore une ou des conditions relatives au dépassement de Pmax.

On remarque qu'alternativement, la prise en compte de Pmax peut être mise en œuvre sous la forme d'une borne supérieure de la puissance P2 qui ne doit pas être dépassée, même sur une durée très courte.

Comme indiqué précédemment, l'exclusion de plages de valeurs de Pout et le nombre maximal d'arrêt(s) de la charge constituent des conditions relatives à la recharge du véhicule dans des conditions n'induisant pas sa détérioration.

Avantageusement, la puissance P2 est construite en tant que somme entre d'une part la puissance P1 (aux instants correspondants) et, d'autre part une grandeur de régulation (pouvant prendre des valeurs négatives) représentative d'un ajustement de la puissance P1 par rapport à sa valeur initiale.

En pratique, la valeur de P1 étant connue, le traitement effectué pour déterminer P2 porte essentiellement sur cette grandeur de régulation.

Par exemple, l'approche retenue pour déterminer cette grandeur de régulation pour les différents intervalles repose sur une approche heuristique.

Par exemple, dans le cadre de cette approche, pour un intervalle de temps donné, la valeur de la grandeur de régulation est choisie parmi une pluralité de valeurs discrètes respectivement associées à un état du système SYS parmi plusieurs possibles.

Les valeurs en question peuvent par exemple être déterminées au moins à partir de P1.

L'état du système est déterminé à partir des éléments considérés (les prévisions de consommation, Pmax, et/ou le comportement du dispositif PROT, etc). Les éléments retenus sont par exemple successivement analysés, chaque élément donnant lieu à la retenue d'une ou plusieurs valeurs parmi une pluralité de valeurs possibles, et ce de façon à aboutir à la retenue d'une seule valeur. Par exemple, l'analyse d'au moins un élément est adaptée pour donner lieu à la retenue d'une unique valeur de la grandeur de régulation, et ce au moins pour le dernier élément analysé. D'autres éléments que le dernier peuvent aboutir à la retenue d'une unique valeur, interrompant par-là la séquence d'analyse des éléments.

On remarque que pour un élément donné, les valeurs possibles parmi lesquelles la ou les valeurs retenues sont choisies sont par exemple définies en fonction du résultat de l'analyse du critère précédent. Autrement dit, le deuxième critère analysé peut aboutir à la retenue de valeurs possibles (parmi lesquelles la sélection est opérée par la suite) différentes en fonction du résultat de l'analyse du critère précédent.

Par exemple, en ce qui concerne les prévisions à court terme, s'il est déterminé pour un intervalle de temps que l'écart entre Pmax et les prévisions de consommation est inférieur à une valeur seuil, la valeur retenue de la grandeur de régulation est choisie pour que la puissance P2 soit nulle ou minimale.

On remarque que certaines valeurs peuvent être exclues au cours du temps, par exemple suite à leur sélection un nombre prédéterminé de fois au cours de ou partie des intervalles de temps passé.

Le module de régulation REG est configuré pour basculer entre le premier mode de fonctionnement et le deuxième mode de fonctionnement. Autrement dit, le module REG peut basculer entre ces modes de manière bidirectionnelle.

Le basculement du premier mode vers le deuxième mode est avantageusement opéré en réponse à la vérification d'au moins une première condition.

Avantageusement, au moins une de ces premières conditions est définie en fonction de la comparaison entre la puissance électrique maximale Pmax et d'une grandeur représentative d'une puissance électrique totale à fournir par ledit point de livraison pour le dispositif de recharge et lesdits autres équipements au cours de ladite plage temporelle de recharge.

Autrement dit, cette grandeur est définie à partir de la puissance totale sollicitée ou susceptible d'être sollicitée par les équipements EQi et le dispositif de recharge lors d'un ou plusieurs intervalles de temps de la plage PTr.

La grandeur présente une valeur donnée au cours d'un intervalle donné. En d'autres termes, elle représente la puissance électrique soutirée ou prévue pour être soutirée par le dispositif RECH et les équipements pour chaque instant de cet intervalle.

La grandeur considérée est par exemple associée à un intervalle de temps passé. Dans cette configuration, la grandeur est construite à partir des données de mesure DM pour la consommation des équipements, ainsi que l'historique de la puissance Pout fournie (qui est par exemple stocké dans la mémoire lors du fonctionnement du dispositif de recharge RECH). Alternativement, la valeur (ou les valeurs) de P2 pour l'intervalle considéré est prise en compte.

Alternativement, la grandeur considérée est associée à un intervalle futur. Dans cette configuration, la grandeur est construite à partir de prévisions de consommation des équipements EQi, par exemple telles celles générées par le module d'optimisation OPT ou par le module de régulation REG. En outre, la puissance électrique associée au dispositif RECH correspond à la valeur de P1 prévue par le profil de recharge pour cet instant.

En pratique, la grandeur est par exemple construite pour correspondre à la somme de la consommation des équipements EQi (prévue ou réalisée) et celle du dispositif de recharge (prévue, réalisée respectivement) pour l'intervalle associé.

La comparaison menée correspond par exemple à une différence entre Pmax et la puissance consommée cumulée sur les équipements EQi et le dispositif de recharge RECH.

Avantageusement, la condition est construite à partir de la valeur de la grandeur pour différents intervalles consécutifs. En outre, elle est construite pour être vérifiée si la valeur de cette grandeur dépasse la puissance maximale Pmax pour un nombre prédéterminé d'intervalles consécutifs. Autrement dit, la condition est détectée comme vérifiée si elle est vérifiée pour un nombre choisi d'intervalles consécutifs.

Avantageusement, les intervalles en question sont des intervalles futurs, de sorte que le dispositif RECH évalue ainsi l'état futur du point de livraison PDL et anticipe des événements potentiellement problématiques.

Ce nombre est avantageusement prédéterminé en fonction du fonctionnement du dispositif de protection PROT, et correspond ou approche par exemple la durée maximale de dépassement de Pmax que celui-ci peut tolérer sans bloquer le soutirage au niveau du point de livraison.

Alternativement, ce nombre est pris égal à un (un seul intervalle étant alors considéré).

Avantageusement, au moins une première condition est définie à partir de la consommation des équipements telle que prévue par le module d'optimisation pour la construction du profil de recharge, et ce pour au moins un intervalle de temps, et d'une grandeur fonction de la consommation des équipements EQi telle que mesurée, c'est-à-dire la puissance fournie par la courbe CONSO.

Le ou les intervalles considérés sont futurs et/ou passés.

Pour chaque intervalle passé, la grandeur correspond directement à la consommation (i.e. la puissance électrique) des équipements telle que mesurée pour l'intervalle considéré. Ainsi, pour cet intervalle sont prises en compte la prévision de consommation des équipements EQi et leur consommation telle que mesurée.

Pour chaque intervalle futur, la grandeur est aussi une prévision de consommation des équipements EQi pour cet intervalle. Cette prévision est par exemple construite au moins à partir de données de mesure DM récentes, par exemple relatives à un ou plusieurs intervalles séparés de l'intervalle considéré d'une durée maximale prédéterminée (ce qui se traduit par exemple sous la forme de la prise en compte des i dernières données reçues du point de livraison PDL relatives à la consommation des équipements EQi). Les modalités de cette première prévision sont par exemple celles mises en œuvre dans le cadre du deuxième mode de fonctionnement, et correspondent à des prévisions à court terme.

Avantageusement, la condition vise l'écart entre la consommation prévue par le module d'optimisation et la consommation telle que mesurée ou prévue à partir de données de consommation plus récentes.

Avantageusement, la condition est construite pour être vérifiée si une grandeur représentative de l'écart constaté est supérieure à une valeur seuil pour un nombre prédéterminé d'intervalles consécutifs (par exemple supérieur ou égal à 1) associés à cette condition.

En pratique, la grandeur analysée (qui correspond optionnellement à une valeur absolue) peut correspondre à une différence classique. Toutefois, d'autres modalités de calcul peuvent être envisagées, de sorte qu'une différence est uniquement un exemple d'opération possible.

On remarque que cette condition peut être prise comme seule condition de basculement. Alternativement, elle est employée conjointement à une autre condition telle celle-ci-dessus.

Par ailleurs, le module de régulation REG est avantageusement configuré pour basculer du deuxième mode de fonctionnement vers le premier mode de fonctionnement - dans le cadre duquel il régule la puissance Pout pour la mise en œuvre du profil de recharge - en réponse à la vérification d'au moins une deuxième condition . Avantageusement, au moins une de ces conditions est définie en fonction de la comparaison entre la puissance électrique maximale du point de livraison et une deuxième grandeur représentative d'une puissance électrique totale à fournir par le point de livraison pour le dispositif de recharge et lesdits autres équipements.

Cette deuxième grandeur est par exemple identique à la grandeur utilisée pour le basculement du premier mode de fonctionnement vers le deuxième mode de fonctionnement (les valeurs de cette grandeur considérées étant toutefois a priori associées à d'autres intervalles).

La deuxième condition est par exemple construite pour être vérifiée si la différence entre la puissance Pmax et la valeur de cette deuxième grandeur est inférieure à une valeur prédéterminée pendant un ou plusieurs intervalles. Préférentiellement, les intervalles considérés sont des intervalles futurs.

Alternativement ou parallèlement, la ou une deuxième condition prise en compte est définie en fonction de la consommation des équipements EQi telle que mesurée, c'est-à-dire la puissance fournie par la courbe CONSO, et la consommation des équipements telle que prévue par le module d'optimisation pour la construction du profil de recharge, et ce pour au moins un intervalle de temps.

Par exemple, cette condition est proche de celle employée en tant que première condition. Par exemple, elle est identique, à l'exception du fait qu'elle est considérée comme vérifiée lorsque la grandeur représentative de l'écart entre la prévision PC et la consommation telle que mesurée (pour des intervalles passés) ou la prévision construite à partir des mesures (pour des intervalles futurs) est inférieur à une valeur seuil prédéterminée sur le ou les intervalles retenus pour cette condition. Cette valeur seuil peut être différente de celle employée en première condition. La deuxième condition peut également en différer notamment de par le nombre d'intervalles pris en compte.

Toujours en référence à la Figure 1, le module d'apprentissage MA est configuré pour générer les données d'apprentissage DA. Ces données sont avantageusement employées dans le cadre du fonctionnement du module d'optimisation OPT, et/ou du fonctionnement du module de régulation REG.

Avantageusement, les données d'apprentissage DA comprennent des données d'apprentissage de prévision.

Ces données d'apprentissage de prévision sont prévues pour permettre d'améliorer les prévisions opérées par le module d'optimisation et/ou le module de régulation sur la base du fonctionnement du dispositif de recharge RECH au cours du temps. Ces données sont par exemple générées à partir de données statistiques concernant les modes de fonctionnement du module de régulation, sur les basculements entre ces modes, sur la puissance Pout délivrée, sur les données de besoin en recharge collectées du véhicule, sur les horaires de connexion du véhicule et/ou sur les prévisions de consommation précédemment effectuées.

Avantageusement, ces données incluent des données de paramétrage de prévision employées pour la détermination des prévisions de consommation déterminées par le dispositif de recharge RECH de manière générale, et ce quelle que soit la méthode de prévision employée, par exemple une méthode de type GAM, une méthode d'agrégation d'experts ou bien une méthode d'apprentissage de type « Deep Learning » (qui vient de l'anglais et peut être traduit par apprentissage profond).

Avantageusement, les données d'apprentissage comprennent également des données d'apprentissage d'optimisation prévues pour affiner les modalités de détermination du profil de recharge Pr au cours du temps à partir des données employées.

Ces données incluent avantageusement des données de paramétrage de résolution, qui incluent par exemple des valeurs des facteurs de pondération des sous-métriques employées pour la construction du profil de recharge. Ces valeurs sont ajustées au cours du temps. Comme précédemment, ces ajustements sont avantageusement menés sur la base des données collectées lors du fonctionnement du dispositif de recharge RECH.

Les données d'apprentissage incluent avantageusement des données d'apprentissage de régulation configurées pour affiner le fonctionnement du module de régulation, en particulier du deuxième mode de fonctionnement, au cours du temps.

Ces données incluent par exemple des données de paramétrage de régulation définissant une ou plusieurs règles relatives à la détermination de la grandeur de régulation. Ces données de paramétrage de régulation conditionnent par exemple les valeurs résultant de l'analyse de tout ou partie des éléments retenus, l'ordre d'analyse des éléments retenus et/ou la nature des éléments retenus.

Comme précédemment, ces données sont avantageusement construites sur la base des données collectées au cours du fonctionnement du dispositif RECH.

Les données d'apprentissage sont par exemple construites par le module d'apprentissage sur la base de règles d'apprentissage qui définissent la configuration du module d'apprentissage.

Ces règles d'apprentissage reposent par exemple sur une méthode d'évaluation des décisions opérées par les composants du dispositif de recharge RECH (en particulier les modules OPT et REG). L'évaluation d'une décision, telle que par exemple la construction d'un profil de recharge donné ou la détermination d'une valeur de la grandeur de régulation, repose par exemple sur la comparaison entre cette décision et au moins une simulation de cette décision opérée avec un ou plusieurs autres éléments de la décision ayant été modifié (tel que par exemple, pour la détermination de la grandeur de régulation, la nature d'un élément retenu pour la détermination de P2, l'ordre des éléments et/ou les valeurs retenues pour l'analyse de chaque élément). Cette comparaison est configurée pour aboutir à l'évaluation de la décision mise en œuvre, par exemple via un ou plusieurs indicateurs quantifiés, et l'ajustement des données d'apprentissage en fonction des évaluations effectuées.

En pratique, ces règles d'apprentissage définissent la manière dont les différentes données d'apprentissage sont générées à partir des informations de fonctionnement du dispositif de recharge RECH collectées au cours du temps, et avantageusement la nature et la forme des données issues du fonctionnement du dispositif de recharge RECH qui sont employées pour la génération des données d'apprentissage via les règles d'apprentissage.

Comme indiqué précédemment, ces données d'apprentissage sont optionnellement employées par le module de régulation et le module d'optimisation pour la mise en œuvre de leur fonctionnalité. Lorsqu'elles le sont, elles sont employées pour les techniques de résolution mises en œuvre et/ou de construction des données utilisées en entrée pour cette résolution. Alternativement, quand elles ne le sont pas, les modules OPT et REG emploient d'autres valeurs, par exemple prédéterminées. On remarque que ces valeurs prédéterminées peuvent faire l'objet de modifications, par exemple sous la forme de mises à jour au cours desquelles les dispositifs de recharge RECH sont mis à jour, par exemple *in situ* par un opérateur, ou bien à distance.

L'interface IHM comprend par exemple un affichage et/ou un ou plusieurs boutons de saisie (éventuellement combinés avec l'affichage sous forme d'un affichage tactile). Cette interface est prévue pour la saisie de données par l'utilisateur, ainsi que pour l'affichage d'informations à destination de l'utilisateur, telles que des informations relatives à la charge du véhicule notamment l'instant de fin de charge, l'état de charge correspondant, etc.

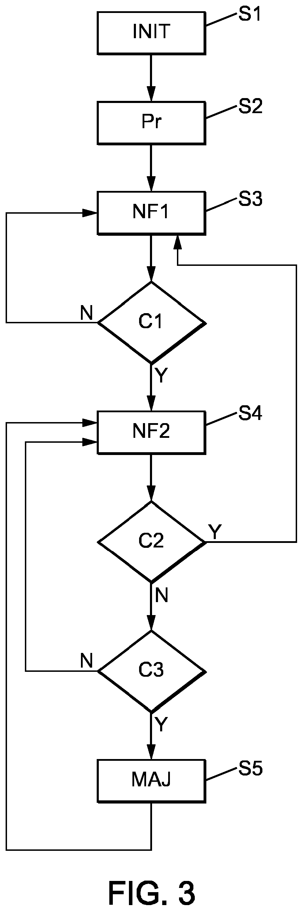

Le fonctionnement du dispositif de recharge va maintenant être décrit en référence aux Figures, notamment aux Figures 2 et 3.

Lors d'une étape S1 initiale, le véhicule VE est connecté au dispositif de recharge RECH (instant t0).

En réponse, le module d'optimisation OPT construit le profil de recharge Pr lors d'une étape S2. On remarque que cette étape S2 peut également intervenir avant la connexion du véhicule au dispositif de recharge.

Pour ce faire, il procède comme indiqué ci-dessus. Notamment, il construit la plage PTr, notamment son instant de début et de fin. En outre, il construit les prévisions de consommation PC des équipements EQi sur la plage temporelle PTr. Cette construction prend notamment en compte les données de mesure DM, et avantageusement également les données d'apprentissage DA. Le profil de recharge Pr est alors déterminé à partir de ces prévisions PC et de Pmax, et optionnellement des autres éléments considérés.

Une fois le profil de recharge Pr construit, lors d'une étape S3 débutant avec la plage temporelle de recharge (t init), le dispositif de recharge démarre la recharge effective du véhicule VE. A cet effet, le module de régulation REG est initié dans son premier mode de fonctionnement, et délivre la puissance Pout régulée pour correspondre à la puissance P1. En pratique, à un instant donné correspond alors une puissance Pout régulée pour correspondre à la puissance P1 du profil de recharge construite pour cet instant.

Parallèlement, le dispositif de recharge RECH, en particulier par exemple le module de régulation REG, réalise la surveillance de la vérification de la ou les premières conditions pour le basculement du module de régulation vers le deuxième mode de fonctionnement. En pratique, pour l'intervalle courant (ou pour chaque intervalle prédéterminé, par exemple à fréquence régulière), les premières conditions sont analysées. Si elles sont détectées comme n'étant pas vérifiées, le premier mode de fonctionnement est maintenu pendant l'intervalle suivant.

Si les premières conditions sont détectées comme vérifiées, lors d'une étape S4, le module de régulation REG bascule vers le deuxième mode de fonctionnement, qui est alors par exemple mis en œuvre à compter de l'intervalle suivant (instant t1). Ceci est par exemple le cas lorsque la consommation effective des équipements EQi diverge suffisamment de la consommation telle que prévue pour la construction du profil de recharge Pr.

Lors de cette étape S4, le module de régulation régule la puissance Pout pour la faire correspondre à la puissance P2.

Parallèlement, il détermine si la ou les deuxièmes conditions de basculement vers le premier mode de fonctionnement sont réunies. Ceci est par exemple vérifié régulièrement, par exemple à chaque intervalle de temps.

Si tel est le cas, le module de régulation rebascule vers le premier mode de fonctionnement (instant t2). Sur la Figure 2A, ce premier mode est à nouveau mis en œuvre jusqu'à l'instant t3, où le module de régulation repasse en deuxième mode de fonctionnement.

Si tel n'est pas le cas, il détermine si la ou les conditions de mise à jour du profil de recharge sont réunies (elles le sont par exemple à l'instant t4).

Par exemple, l'une de ces conditions est définie en fonction d'un écart entre l'énergie électrique effectivement fournie au véhicule électrique pendant la plage temporelle de recharge jusqu'à un instant donné, et l'énergie électrique correspondant à la puissance électrique fournie dans la plage temporelle de recharge jusqu'à l'instant donné telle que définie par le profil de recharge Pr avant mise à jour.

Autrement dit, cette condition porte sur la comparaison entre l'énergie électrique cumulée effectivement fournie au véhicule par le dispositif de recharge pendant la plage PTr (c'est-à-dire un cumul temporel de Pout jusqu'à l'instant considéré) et l'énergie cumulée que le véhicule aurait reçue pendant la plage PTr si le profil de recharge avait été appliqué pour toute la portion écoulée de la plage PTr (un cumul temporel de P1 jusqu'à l'instant considéré).

Si cet écart, qui se présente par exemple sous la forme d'une différence, est supérieur à un seuil prédéterminé, le module d'optimisation est commandé pour la mise à jour du profil de recharge.

Avantageusement, ces conditions sont testées à chaque nouvel intervalle, du moins tant qu'elles n'ont pas été vérifiées.

Avantageusement, une fois ces conditions vérifiées et la mise à jour réalisée, l'analyse des conditions est interrompue pendant un laps de prédéterminé, correspondant par exemple à un nombre prédéterminé d'intervalles.

On remarque qu'une condition qui peut être employée porte sur un changement des index tarifaires utilisés pour la détermination du tarif de l'énergie électrique par le module d'optimisation.

Par exemple, si une grandeur quantifiant un écart entre les anciens index et les nouveaux index est supérieure à une valeur seuil choisie, le module d'optimisation est rappelé pour mise à jour du profil de recharge.

Cette condition peut être utilisée seule, ou en combinaison d'au moins une autre.

Comme illustré sur la Figure 2A, cette mise à jour se traduit par le remplacement des valeurs de P1 prévues pour les intervalles futurs par de nouvelles valeurs, qui sont prises en compte en lieu et place des valeurs initiales pour ces intervalles à partir de cet instant (t5).

À l'issue de cette mise à jour, la mise en œuvre du deuxième mode de fonctionnement se poursuit, la puissance P2 étant alors dorénavant déterminée à partir du profil de recharge mis à jour et non du profil initial (ou du précédent profil utilisé de manière générale).

Comme précédemment, la surveillance des premières conditions reste mise en œuvre, ainsi que celle(s) d'une mise à jour du profil de recharge, les réponses correspondantes étant mises en œuvre en conséquence.

Sur la Figure 2A, le dispositif bascule vers le premier mode de fonctionnement à partir de l'instant t6, ce mode restant implémenté jusqu'à l'instant t_fin.

L'invention présente plusieurs avantages.

Tout d'abord, elle présente un fonctionnement d'une plus grande souplesse que les approches connues, notamment en ce qu'elle permet le basculement entre des modes de fonctionnement basés sur des considérations différentes. L'une est déterminée à un instant et ne nécessite pas de calcul ultérieur, et l'autre agit comme mécanisme de compensation de la divergence entre l'évolution prévue du système en amont et son état en temps réel.

En outre, les modalités de fonctionnement du dispositif sont nombreuses, de sorte qu'il est aisément adaptable en fonction des conditions d'utilisation, notamment des équipements EQi, de la nature de l'installation, etc.

En outre, il est évolutif, en ce qu'il procède à un ajustement de son fonctionnement par apprentissage à partir des données collectées par lui.

On remarque que les écarts dont il est fait mention dans la description ci-dessus sont par exemple des écarts en valeur absolue.

On remarque que les prévisions réalisées pour les besoins du module d'optimisation et/ou du module de régulation peuvent en pratique être construites par un module dédié de prévision. Ce module communique les prévisions idoines au module correspondant, par exemple sur requête.

On remarque en outre qu'on peut procéder à la construction du profil Pr en employant une population de solutions candidates pour chacune desquelles des valeurs de sous-métriques sont déterminées, fournissant par-là une valeur de la métrique. Une sélection est ensuite opérée parmi les solutions candidates sur la base des valeurs respectives des métriques de ces solutions. Par exemple, à chaque solution candidate correspond une prévision de consommation donnée, et/ou à des valeurs données des facteurs de pondération.

On remarque que l'analyse de la vérification de la ou les conditions pour le déclenchement de la mise à jour du profil de recharge est avantageusement indépendante du mode de fonctionnement couramment employé. Notamment, ces conditions peuvent être testées dans le premier mode de fonctionnement.

## Revendications

1. Dispositif de recharge, notamment de véhicule électrique, le dispositif de recharge (RECH) étant adapté pour être raccordé en entrée à un point de livraison d'électricité (PDL) adapté pour fournir une puissance électrique maximale (Pmax), le dispositif de recharge étant adapté pour délivrer en sortie une puissance électrique régulée (Pout) pour effectuer la recharge en énergie électrique d'un véhicule électrique (VE), le dispositif de recharge comprenant :
- un module d'optimisation (OPT) configuré pour construire un profil de recharge (Pr) associé à une plage temporelle de recharge (PTr) et représentatif d'une première puissance électrique de recharge (P1) adaptée pour être délivrée par le dispositif de recharge au cours de ladite plage temporelle de recharge pour la recharge du véhicule électrique, le profil de recharge étant construit au moins en fonction de prévisions de consommation électrique (PC) d'autres équipements raccordés (EQi) audit point de livraison pour au moins une partie de ladite plage temporelle de recharge et de la puissance électrique maximale, et **caractérisé en ce que** le dispositif de recharge comprend:
- un module de régulation (REG) adapté pour réguler la puissance électrique délivrée en sortie, le module de régulation présentant :
- un premier mode de fonctionnement dans lequel il est configuré pour réguler la puissance électrique délivrée en sortie pour faire correspondre ladite puissance électrique (Pout) à la première puissance électrique de recharge (P1) pendant au moins une partie de la plage temporelle de recharge associée, et
- un deuxième mode de fonctionnement dans lequel il est configuré pour réguler la puissance électrique délivrée en sortie (Pout) pour la faire correspondre à une deuxième puissance électrique de recharge (P2) déterminée au moins en fonction de données de consommation électrique (DM) desdits autres équipements mesurée au cours de ladite plage temporelle (PTr) et de la première puissance de recharge (P1) du profil de recharge (PTr),
le module de régulation étant adapté pour basculer entre le premier mode de fonctionnement et le deuxième mode de fonctionnement.

2. Dispositif de recharge selon la revendication 1, dans lequel le module de régulation (REG) est configuré pour basculer du premier mode de fonctionnement vers le deuxième mode de fonctionnement en réponse à la vérification d'au moins une première condition dont au moins une condition est associée à un ou plusieurs intervalles de temps de la plage temporelle de recharge et est définie en fonction des prévisions de consommation électrique des autres équipements pour le ou lesdits intervalles de temps et de données de consommation électrique desdits autres équipements mesurée pendant la plage temporelle de recharge.

3. Dispositif de recharge selon la revendication 2, dans lequel l'au moins une condition est configurée pour être détectée comme vérifiée en réponse au fait qu'une grandeur représentative de l'écart entre d'une part la prévision de consommation électrique (PC) des autres équipements et d'autre part la consommation desdits autres équipements telle que mesurée aux instants correspondants ou bien une prévision de consommation desdits autres équipements déterminées pour les instants correspondants à partir desdites données de consommation électriques mesurée pendant la plage temporelle de recharge est supérieure à une valeur seuil pendant le ou les intervalles associés.

4. Dispositif de recharge selon la revendication 2 ou 3, dans lequel au moins une première condition est définie en fonction de la comparaison entre la puissance électrique maximale (Pmax) du point de livraison et d'une grandeur représentative d'une puissance électrique totale à fournir par ledit point de livraison (PDL) pour le dispositif de recharge (RECH) et lesdits autres équipements (EQi) au cours de ladite plage temporelle de recharge (PTr), la grandeur représentative d'une puissance électrique totale à fournir par le point de livraison pour le dispositif de recharge et lesdits autres équipements étant construite pour correspondre à une puissance électrique totale telle qu'estimée pour au moins un intervalle de temps futur de la plage temporelle de recharge (PTr).

5. Dispositif de recharge selon la revendication 4, dans lequel la première condition définie en fonction de la comparaison entre la puissance électrique maximale (Pmax) du point de livraison (PDL) et de ladite grandeur est construite pour être vérifiée si la valeur de ladite grandeur dépasse la puissance maximale pour un nombre prédéterminé d'intervalles de temps futurs de la plage temporelle, ledit nombre prédéterminé étant fonction d'une amplitude du dépassement de la puissance maximale par ladite grandeur.

6. Dispositif de recharge selon l'une quelconque des revendications précédentes, dans lequel le module d'optimisation est adapté pour mettre à jour le profil de recharge (Pr) pour au moins une portion restante de ladite plage temporelle de recharge en fonction au moins de prévisions de consommation électrique des autres équipements raccordés audit point de livraison pour au moins une partie de ladite portion restante de la plage temporelle de recharge déterminées au moins à partir de données de consommation électrique desdits autres équipements mesurée au cours de la plage temporelle de recharge.

7. Dispositif de recharge selon la revendication 6, dans lequel le module d'optimisation est adapté pour la mise à jour du profil de recharge en réponse à la vérification d'une condition prédéterminée définie en fonction d'un écart entre l'énergie électrique correspondant à la puissance électrique régulée (Pout) effectivement fournie au véhicule électrique pendant la plage temporelle de recharge jusqu'à un instant donné, et l'énergie électrique correspondant à la première puissance électrique (P1) définie par le profil de recharge (Pr) jusqu'à l'instant donné de la plage de recharge (PTr).

8. Dispositif de recharge selon l'une quelconque des revendications précédentes, dans lequel le module de régulation (REG) est configuré pour basculer du deuxième mode de fonctionnement vers le premier mode de fonctionnement pour la mise en œuvre du profil de recharge (Pr) en réponse à la vérification d'au moins une deuxième condition dont au moins une condition est associée à un ou plusieurs intervalles de temps (I(n)) de la plage temporelle de recharge et est définie en fonction des prévisions de consommation électrique des autres équipements pour le ou lesdits intervalles de temps et de données de consommation électrique desdits autres équipements mesurée pendant la plage temporelle de recharge.

9. Dispositif de recharge selon la revendication 8, dans lequel l'au moins une condition de l'au moins une deuxième condition est configurée pour être détectée comme vérifiée en réponse au fait qu'une grandeur représentative de l'écart entre d'une part la prévision de consommation électrique (PC) des autres équipements et d'autre part la consommation desdits autres équipements telle que mesurée aux instants correspondants ou bien une prévision de consommation desdits autres équipements déterminées pour les instants correspondants à partir desdites données de consommation électriques mesurée pendant la plage temporelle de recharge est inférieure à une valeur seuil pendant le ou les intervalles associés.

10. Dispositif de recharge selon l'une quelconque des revendications précédentes, dans lequel le profil de recharge est en outre construit en fonction d'au moins un élément parmi :
- un comportement en recharge d'un dispositif de stockage d'énergie électrique (STO) du véhicule électrique (VE),
- un besoin en énergie électrique du dispositif de stockage d'énergie électrique (STO) du véhicule électrique pour la recharge dudit dispositif de stockage d'énergie électrique (VE),
- un tarif de l'énergie électrique,
- un comportement électrotechnique d'un équipement de protection électrique (PROT) du point de livraison.

11. Dispositif de recharge selon l'une quelconque des revendications précédentes, dans lequel la deuxième puissance électrique est en outre définie en fonction d'au moins un élément parmi :
- un comportement électrotechnique d'un équipement de protection électrique au niveau du point de livraison,
- une contrainte de recharge du véhicule électrique (VE) représentative d'au moins une plage de valeurs de puissance électrique fournie en sortie qui est exclue ou d'un nombre maximal d'arrêts de la charge du véhicule électrique (VE) par le dispositif de recharge (RECH) au cours de la plage temporelle de recharge.

12. Dispositif de recharge selon l'une quelconque des revendications précédentes, dans lequel le profil de recharge (Pr) est déterminé en tant que solution optimale d'un problème de minimisation de la valeur maximale de la puissance électrique soutirée au point de livraison par le dispositif de recharge (RECH) et les autres équipements (EQi) pour la plage temporelle de recharge, d'un coût total de l'énergie électrique à fournir par le point de livraison pour la plage temporelle de recharge et d'un instant de fin de recharge du véhicule électrique (VE).

13. Dispositif de recharge selon l'une quelconque des revendications, comprenant en outre un module d'apprentissage configuré pour générer des données d'apprentissage à partir du fonctionnement du dispositif de recharge, au moins les prévisions de consommation électrique des autres équipements raccordés audit point de livraison pour au moins une partie de ladite plage temporelle de recharge étant construites en fonction desdits données d'apprentissage.

14. Procédé de recharge de véhicule électrique au moyen d'un dispositif de recharge (RECH) raccordé en entrée à un point de livraison d'électricité (PDL) adapté pour fournir au dispositif de recharge une puissance électrique maximale (Pmax) et pour délivrer en sortie une puissance électrique régulée (Pout) pour effectuer la recharge en énergie électrique d'un véhicule électrique (VE), le procédé comprenant :
- construire un profil de recharge (Pr) associé à une plage temporelle de recharge (PTr) et représentatif d'une première puissance électrique de recharge (P1) adaptée pour être délivrée en sortie au cours de ladite plage temporelle de recharge pour la recharge du véhicule électrique, le profil de recharge (Pr) étant construit au moins en fonction de prévisions de consommation électrique d'autres équipements raccordés audit point de livraison pour au moins une partie de ladite plage temporelle de recharge et de la puissance électrique maximale, et **caractérisé par** les étapes suivantes:
- mettre en œuvre un premier mode de fonctionnement du dispositif de recharge dans lequel le dispositif de recharge (RECH) fournit en sortie une puissance électrique régulée pour correspondre à la première puissance électrique de recharge (P1) pendant au moins une partie de la plage temporelle de recharge associée.
- basculer du premier mode de fonctionnement vers un deuxième mode de fonctionnement dans lequel le dispositif de recharge (RECH) délivrant en sortie une puissance électrique régulée (Pout) pour correspondre à une deuxième puissance électrique de recharge (P2) déterminée au moins en fonction de données de consommation électrique desdits autres équipements mesurée au cours de ladite plage temporelle et de la première puissance de recharge du profil de recharge.

15. Programme informatique comprenant des instructions pour la mise en œuvre du procédé selon la revendication 14 lorsqu'exécutées par un processeur.

## Patentansprüche

1. Ladevorrichtung, insbesondere für ein Elektrofahrzeug, wobei die Ladevorrichtung (RECH) dazu ausgelegt ist, eingangsseitig an einen Stromlieferpunkt (PDL) angeschlossen zu werden, der dazu ausgelegt ist, eine maximale elektrische Leistung (Pmax) zu liefern, wobei die Ladevorrichtung dazu ausgelegt ist, eine geregelte elektrische Leistung (Pout) abzugeben, um das Aufladen eines Elektrofahrzeugs (VE) mit elektrischer Energie zu bewirken, wobei die Ladevorrichtung Folgendes umfasst:
- ein Optimierungsmodul (OPT), das dazu ausgebildet ist, ein Ladeprofil (Pr) zu erstellen, das einem Ladezeitbereich (PTr) zugeordnet ist und eine erste elektrische Ladeleistung (P1) repräsentiert, die geeignet ist, von der Ladevorrichtung während des Ladezeitbereichs zum Laden des Elektrofahrzeugs geliefert zu werden, wobei das Ladeprofil zumindest in Abhängigkeit von Prognosen des Stromverbrauchs (PC) anderer an den Lieferpunkt angeschlossener Geräte (EQi) für zumindest einen Teil des Ladezeitbereichs und der maximalen elektrischen Leistung erstellt wird, und **dadurch gekennzeichnet, dass** die Ladevorrichtung Folgendes umfasst:
- ein Regulierungsmodul (REG), das dazu ausgelegt ist, die abgegebene elektrische Leistung zu regulieren, wobei das Regulierungsmodul Folgendes bietet:
- eine erste Betriebsart, in der es dazu ausgebildet ist, die abgegebene elektrische Leistung so zu regulieren, dass die elektrische Leistung (Pout) während mindestens eines Teils des zugehörigen Ladezeitbereichs der ersten elektrischen Ladeleistung (P1) entspricht, und
- eine zweite Betriebsart, in der es dazu ausgebildet ist, die abgegebene elektrische Leistung (Pout) so zu regulieren, dass sie einer zweiten elektrischen Ladeleistung (P2) entspricht, die zumindest in Abhängigkeit von den während des Zeitbereichs (PTr) gemessenen Stromverbrauchsdaten (DM) der anderen Geräte und der ersten Ladeleistung (P1) des Ladeprofils (PTr) ermittelt wird,
wobei das Regulierungsmodul dazu ausgelegt ist, zwischen der ersten Betriebsart und der zweiten Betriebsart umzuschalten.

2. Ladevorrichtung nach Anspruch 1, wobei das Regulierungsmodul (REG) dazu ausgebildet ist, als Reaktion auf die Überprüfung mindestens einer ersten Bedingung von der ersten Betriebsart auf die zweite Betriebsart umzuschalten, von der mindestens eine Bedingung mit einem oder mehreren Zeitintervallen des Ladezeitbereichs verknüpft ist und in Abhängigkeit von Prognosen des Stromverbrauchs der anderen Geräte für das oder die Zeitintervalle und von Daten des während des Ladezeitbereichs gemessenen Stromverbrauchs der anderen Geräte definiert ist.

3. Ladevorrichtung nach Anspruch 2, wobei die mindestens eine Bedingung dazu ausgebildet ist, in Reaktion darauf als erfüllt erkannt zu werden, dass eine Größe, welche die Abweichung zwischen einerseits der Stromverbrauchsprognose (PC) der anderen Geräte und andererseits dem Verbrauch der anderen Geräte, wie er zu den entsprechenden Zeitpunkten gemessen wird, oder auch einer Verbrauchsprognose der anderen Geräte, die für die entsprechenden Zeitpunkte aus den während des Ladezeitbereichs gemessenen Stromverbrauchsdaten ermittelt werden, repräsentiert, während des oder der zugehörigen Intervalle über einem Schwellenwert liegt.

4. Ladevorrichtung nach Anspruch 2 oder 3, wobei mindestens eine erste Bedingung in Abhängigkeit von dem Vergleich zwischen der maximalen elektrischen Leistung (Pmax) des Lieferpunkts und einer Größe, die eine von dem Lieferpunkt (PDL) für die Ladevorrichtung (RECH) und die anderen Geräte (EQi) während des Ladezeitbereichs (PTr) zu liefernde elektrische Gesamtleistung repräsentiert, definiert wird, wobei die eine von dem Lieferpunkt zu liefernde elektrische Gesamtleistung für die Ladevorrichtung und die anderen Geräte repräsentierende Größe dazu ausgelegt ist, einer elektrischen Gesamtleistung zu entsprechen, wie sie für mindestens ein zukünftiges Zeitintervall des Ladezeitbereichs (PTr) geschätzt wird.

5. Ladevorrichtung nach Anspruch 4, wobei die in Abhängigkeit von dem Vergleich zwischen der maximalen elektrischen Leistung (Pmax) des Lieferpunkts (PDL) und der genannten Größe definierte erste Bedingung dazu ausgelegt ist, überprüft zu werden, ob der Wert der genannten Größe die maximale Leistung für eine vorbestimmte Anzahl von zukünftigen Zeitintervallen des Zeitbereichs übersteigt, wobei die vorbestimmte Anzahl eine Funktion einer Amplitude der Überschreitung der maximalen Leistung durch die genannte Größe ist.

6. Ladevorrichtung nach einem der vorhergehenden Ansprüche, wobei das Optimierungsmodul dazu ausgelegt ist, das Ladeprofil (Pr) für mindestens einen verbleibenden Teil des Ladezeitbereichs in Abhängigkeit von zumindest Prognosen des Stromverbrauchs der anderen an den Lieferpunkt angeschlossenen Geräte für mindestens einen Teil des verbleibenden Teils des Ladezeitbereichs zu aktualisieren, die mindestens anhand von Daten über den während des Ladezeitbereichs gemessenen Stromverbrauch der anderen Geräte ermittelt werden.

7. Ladevorrichtung nach Anspruch 6, wobei das Optimierungsmodul zur Aktualisierung des Ladeprofils als Reaktion auf die Überprüfung einer vorbestimmten Bedingung ausgelegt ist, die in Abhängigkeit von einer Abweichung zwischen der elektrischen Energie, die der geregelten elektrischen Leistung (Pout) entspricht, die dem Elektrofahrzeug während des Ladezeitbereichs bis zu einem gegebenen Zeitpunkt effektiv zugeführt wird, und der elektrischen Energie, die der ersten elektrischen Leistung (P1) entspricht, die durch das Ladeprofil (Pr) bis zu dem gegebenen Zeitpunkt des Ladebereichs (PTr) definiert ist.

8. Ladevorrichtung nach einem der vorhergehenden Ansprüche, wobei das Regulierungsmodul (REG) dazu ausgebildet ist, zur Inbetriebnahme des Ladeprofils (Pr) als Reaktion auf die Überprüfung mindestens einer zweiten Bedingung von der zweiten Betriebsart in die erste Betriebsart umzuschalten, wobei mindestens eine Bedingung mit einem oder mehreren Zeitintervallen (I(n)) des Ladezeitbereichs verknüpft ist und als Funktion der Prognosen des Stromverbrauchs der anderen Geräte für das oder die Zeitintervalle und von Daten des während des Ladezeitbereichs gemessenen Stromverbrauchs der anderen Geräte definiert ist.

9. Ladevorrichtung nach Anspruch 8, wobei die mindestens eine Bedingung der mindestens einen zweiten Bedingung dazu ausgebildet ist, in Reaktion darauf als erfüllt erkannt zu werden, dass eine Größe, welche die Abweichung zwischen einerseits der Stromverbrauchsprognose (PC) der anderen Geräte und andererseits dem Verbrauch der anderen Geräte, wie er zu den entsprechenden Zeitpunkten gemessen wird, oder auch einer Verbrauchsprognose der anderen Geräte, die für die entsprechenden Zeitpunkte aus den während des Ladezeitbereichs gemessenen Stromverbrauchsdaten ermittelt werden, repräsentiert, während des oder der zugehörigen Intervalle unter einem Schwellenwert liegt.

10. Ladevorrichtung nach einem der vorhergehenden Ansprüche, wobei das Ladeprofil ferner anhand von mindestens einem der folgenden Elemente erstellt wird:
- einem Ladeverhalten einer elektrischen Energiespeichervorrichtung (STO) des Elektrofahrzeugs (VE),
- einem Bedarf an elektrischer Energie der elektrischen Energiespeichervorrichtung (STO) des Elektrofahrzeugs zum Aufladen der elektrischen Energiespeichervorrichtung (VE),
- einem Tarif für elektrische Energie,
- einem elektrotechnischen Verhalten einer elektrischen Schutzvorrichtung (PROT) am Lieferpunkt.

11. Ladevorrichtung nach einem der vorhergehenden Ansprüche, wobei die zweite elektrische Leistung ferner anhand von mindestens einem der folgenden Elemente definiert wird:
- einem elektrotechnischen Verhalten einer elektrischen Schutzvorrichtung am Lieferpunkt,
- einer Bedingung für das Laden des Elektrofahrzeugs (VE), die mindestens einen Wertebereich der abgegebenen elektrischen Leistung repräsentiert, der ausgenommen ist, oder für eine maximale Anzahl von Stopps des Ladens des Elektrofahrzeugs (VE) durch die Ladevorrichtung (RECH) während des Ladezeitbereichs.

12. Ladevorrichtung nach einem der vorhergehenden Ansprüche, wobei das Ladeprofil (Pr) als optimale Lösung eines Problems der Minimierung des Maximalwerts der elektrischen Leistung, die dem Lieferpunkt von der Ladevorrichtung (RECH) und den anderen Geräten (EQi) für den Ladezeitbereich entnommen wird, der Gesamtkosten der von dem Lieferpunkt für den Ladezeitbereich zu liefernden elektrischen Energie und eines Zeitpunkts für das Ende des Aufladens des Elektrofahrzeugs (VE) ermittelt wird.

13. Ladevorrichtung nach einem der vorhergehenden Ansprüche, die ferner ein Lernmodul umfasst, das dazu ausgebildet ist, aus dem Betrieb der Ladevorrichtung Lerndaten zu erzeugen, wobei zumindest die Prognosen des Stromverbrauchs anderer Geräte, die für zumindest einen Teil des Ladezeitbereichs an den Lieferpunkt angeschlossen sind, anhand der Lerndaten erstellt werden.

14. Verfahren zum Laden eines Elektrofahrzeugs mittels einer Ladevorrichtung (RECH), die eingangsseitig an einen Stromlieferpunkt (PDL) angeschlossen ist, der dazu ausgelegt ist, der Ladevorrichtung eine maximale elektrische Leistung (Pmax) zuzuführen und eine geregelte elektrische Leistung (Pout) abzugeben, um das Laden eines Elektrofahrzeugs (VE) mit elektrischer Energie durchzuführen, wobei das Verfahren die folgenden Schritte umfasst:
- Erstellen eines Ladeprofils (Pr), das einem Ladezeitbereich (PTr) zugeordnet ist und eine erste elektrische Ladeleistung (P1) repräsentiert, die geeignet ist, von der Ladevorrichtung während des Ladezeitbereichs zum Laden des Elektrofahrzeugs abgegeben zu werden, wobei das Ladeprofil (Pr) zumindest in Abhängigkeit von Prognosen des Stromverbrauchs anderer an den Lieferpunkt angeschlossener Geräte für zumindest einen Teil des Ladezeitbereichs und der maximalen elektrischen Leistung erstellt wird, und **gekennzeichnet durch** die folgenden Schritte:
- Inbetriebnahme einer ersten Betriebsart der Ladevorrichtung, in der die Ladevorrichtung (RECH) eine elektrische Leistung abgibt, die so geregelt ist, dass sie der ersten elektrischen Ladeleistung (P1) während mindestens eines Teils des zugehörigen Ladezeitbereichs entspricht,
- Umschalten von der ersten Betriebsart in eine zweite Betriebsart, in der die Ladevorrichtung (RECH) eine geregelte elektrische Leistung (Pout) abgibt, um einer zweiten elektrischen Ladeleistung (P2) zu entsprechen, die zumindest in Abhängigkeit von Daten des Stromverbrauchs der anderen Geräte, die während des Zeitbereichs gemessen werden, und der ersten Ladeleistung des Ladeprofils ermittelt wird.

15. Computerprogramm mit Anweisungen zur Durchführung des Verfahrens nach Anspruch 14, wenn die Anweisungen von einem Prozessor ausgeführt werden.

## Claims

1. Charging device, in particular for an electric vehicle, the charging device (RECH) being adapted to have its input connected to an electricity point of delivery (PDL) adapted to provide a maximum electric power (Pmax), the charging device being adapted to output regulated electric power (Pout) for charging an electric vehicle (VE) with electrical energy, the charging device comprising:
- an optimization module (OPT) configured to construct a charging profile (Pr) associated with a charging time slot (PTr) and representative of a first charging power (PI) adapted to be delivered by the charging device during said charging time slot in order to charge the electric vehicle, the charging profile being constructed at least on the basis of power consumption predictions (PC) for other equipment items (EQi) connected to said point of delivery for at least a portion of said charging time slot and on the basis of the maximum electric power, and **characterized in that** the charging device comprises:
- a regulation module (REG) adapted to regulate the electric power that is output, the regulation module having:
- a first mode of operation wherein it is configured to regulate the electric power that is output to match said electric power (Pout) to the first charging power (P1) during at least a portion of the associated charging time slot, and
- a second mode of operation wherein it is configured to regulate the electric power that is output (Pout) to match it to a second charging power (P2) determined at least on the basis of power consumption data (DM) for said other equipment items measured during said time slot (PTr) and on the basis of the first charging power (P1) of the charging profile (PTr),
the regulation module being adapted to switch between the first mode of operation and the second mode of operation.

2. Charging device according to claim 1, wherein the regulation module (REG) is configured to switch from the first mode of operation to the second mode of operation in response to the satisfying of at least one first condition in which at least one condition is associated with one or more time intervals in the charging time slot and is defined on the basis of power consumption predictions for the other equipment items for said time interval or intervals and on the basis of power consumption data for said other equipment items measured during the charging time slot.

3. Charging device according to claim 2, wherein the at least one condition is configured to be detected as satisfied in response to the fact that a quantity representative of the deviation between the power consumption prediction (PC) for the other equipment items and the consumption of said other equipment items as measured at the corresponding moments or indeed a consumption prediction for said other equipment items determined for the corresponding moments based on said power consumption data measured during the charging time slot is greater than a threshold value during the associated interval or intervals.

4. Charging device according to claim 2 or 3, wherein at least one first condition is defined on the basis of the comparison between the maximum electric power (Pmax) of the point of delivery and a quantity representative of a total electric power to be provided by said point of delivery (PDL) for the charging device (RECH) and said other equipment items (EQi) during said charging time slot (PTr), the quantity representative of a total electric power to be supplied by the point of delivery for the charging device and said other equipment items being constructed to correspond to a total electric power as estimated for at least one future time interval of the charging time slot (PTr).

5. Charging device according to claim 4, wherein the first condition defined on the basis of the comparison between the maximum electric power (Pmax) of the point of delivery (PDL) and said quantity is constructed to be satisfied if the value of said quantity exceeds the maximum power for a predetermined number of future time intervals in the time slot, said predetermined number depending on the amplitude by which said quantity exceeds the maximum power.

6. Charging device according to any one of the preceding claims, wherein the optimization module is adapted to update the charging profile (Pr) for at least a remaining portion of said charging time slot on the basis of at least power consumption predictions for the other equipment items connected to said point of delivery for at least part of said remaining portion of the charging time slot, determined at least from power consumption data for said other equipment items measured during the charging time slot.

7. Charging device according to claim 6, wherein the optimization module is adapted to update the charging profile in response to the satisfying of a predetermined condition defined on the basis of a deviation between the electrical energy corresponding to the regulated electric power (Pout) actually supplied to the electric vehicle during the charging time slot up to a given moment, and the electrical energy corresponding to the first electric power (P1) defined by the charging profile (Pr) up to the given moment of the charging slot (PTr).

8. Charging device according to any one of the preceding claims, wherein the regulation module (REG) is configured to switch from the second mode of operation to the first mode of operation in order to implement the charging profile (Pr) in response to at least one second condition being satisfied, of which at least one condition is associated with one or more time intervals (I(n)) of the charging time slot and is defined on the basis of power consumption predictions for the other equipment items for said time interval or intervals and on the basis of power consumption data for said other equipment items measured during the charging time slot.

9. Charging device according to claim 8, wherein the at least one condition of the at least one second condition is configured to be detected as satisfied in response to the fact that a quantity representative of the deviation between the power consumption prediction (PC) for the other equipment items and the consumption of said other equipment items as measured at the corresponding moments or indeed a consumption prediction for said other equipment items determined for the corresponding moments based on said power consumption data measured during the charging time slot is less than a threshold value during the associated interval or intervals.

10. Charging device according to any of the preceding claims, wherein the charging profile is further constructed on the basis of at least one of the following:
- a charging behavior of an electrical energy storage device (STO) of the electric vehicle (VE),
- an electrical energy requirement of the electrical energy storage device (STO) of the electric vehicle, for charging said electrical energy storage device (VE),
- an electricity pricing,
- an electrotechnical behavior of electrical protection equipment (PROT) of the point of delivery.

11. Charging device according to any one of the preceding claims, wherein the second charging power is further defined as a function of at least one of the following:
- an electrotechnical behavior of electrical protection equipment at the point of delivery,
- a charging constraint of the electric vehicle (VE), representative of at least one range of electric power output values that is excluded or of a maximum number of times that charging is stopped during charging of the electric vehicle (VE) by the charging device (RECH) during the charging time slot.

12. Charging device according to any one of the preceding claims, wherein the charging profile (Pr) is determined as an optimal solution to the problem of minimizing: the maximum value of the electric power drawn at the point of delivery by the charging device (RECH) and the other equipment items (EQi) for the charging time slot, the total cost of the electrical energy to be supplied by the point of delivery for the charging time slot, and an end of charging time for the electric vehicle (VE).

13. Charging device according to any one of the preceding claims, further comprising a learning module configured to generate learning data from the operation of the charging device, at least the power consumption predictions for the other equipment items connected to said point of delivery for at least a portion of said charging time slot being constructed on the basis of said learning data.

14. Method for charging an electric vehicle by means of a charging device (RECH) whose input is connected to an electricity point of delivery (PDL) adapted to provide the charging device with a maximum electric power (Pmax) and to output a regulated electric power (Pout) for charging an electric vehicle (VE) with electrical energy, the method comprising:
- constructing a charging profile (Pr) associated with a charging time slot (PTr) and representative of a first charging power (P1) adapted to be output during said charging time slot in order to charge the electric vehicle, the charging profile (Pr) being constructed at least on the basis of power consumption predictions for the other equipment items connected to said point of delivery for at least a portion of said charging time slot and on the basis of the maximum electric power, and **characterized by** the following steps:
- implementing a first mode of operation of the charging device, wherein the charging device (RECH) outputs electric power regulated to match the first charging power (P1) during at least a portion of the associated charging time slot.
- switching from the first mode of operation to a second mode of operation wherein the charging device (RECH) outputs electric power (Pout) regulated to match a second charging power (P2) determined at least on the basis of power consumption data for said other equipment items measured during said time slot and on the basis of the first charging power of the charging profile.

15. Computer program comprising instructions for implementing the method according to claim 14 when executed by a processor.
